# EUROPÄISCHE PATENTSCHRIFT

(11) **EP 4 219 066 B1**
(45) Veröffentlichungstag und Bekanntmachung des Hinweises auf die Patenterteilung: **22.04.2026**
(21) Anmeldenummer: 23163643.2
(22) Anmeldetag: 27.07.2018
(51) Int. Cl.: B23K 26/38

(54) **VERFAHREN ZUM LASERSCHNEIDEN PLATTENFÖRMIGER WERKSTÜCKE UND ZUGEHÖRIGES COMPUTERPROGRAMMPRODUKT**
METHOD FOR LASER CUTTING OF PLATE-SHAPED WORKPIECES AND ASSOCIATED COMPUTER PROGRAM PRODUCT
PROCÉDÉ DE DÉCOUPE AU LASER DE PIÈCES EN FORME DE PLAQUE ET PRODUIT PROGRAMME INFORMATIQUE ASSOCIÉ

(30) Priorität: 02.08.2017 DE 102017213394
(43) Veröffentlichungstag der Anmeldung: 02.08.2023
(62) Teilanmeldung aus: 18750124.2
(73) Patentinhaber: TRUMPF Werkzeugmaschinen SE + Co. KG, 71254 Ditzingen (DE)
(72) Erfinder: MACH, Patrick, 71404 Korb (DE); BIRK, Marcel, 78713 Schramberg (DE); ROMINGERr, Volker, 71711 Steinheim (DE); KAISER, Tobias, 71277 Rutesheim (DE); BEA, Martin, 70806 Kornwestheim (DE)
(74) Vertreter: Trumpf Patentabteilung

(56) Entgegenhaltungen:
- EP-A1- 2 177 293
- DE-A1- 102014 209 811
- JP-A- 2001 334 379
- JP-A- 2005 014 009

## Beschreibung

Die Erfindung betrifft ein Verfahren zum Entnehmen eines lasergeschnittenen Werkstückteils. Das Werkstückteil kann beispielsweise mit einem Verfahren zum Laserschneiden eines insbesondere plattenförmigen Werkstücks entlang einer Bahnkurve mittels eines Laserstrahls geschnitten werden, wobei zum Erzeugen eines Microjoints mit einer geringeren Höhe als die Werkstückdicke beim Laserschneiden des Werkstücks die Laserleistung des Laserstrahls auf einem der Länge des Microjoints entsprechenden Teilstück der Bahnkurve von einer zum Durchschneiden des Werkstücks ausreichenden, höheren Laserleistung auf eine zum vollständigen Durchschneiden des Werkstücks nicht ausreichende, niedrigere Laserleistung abgesenkt wird.

Ein derartiges Laserschneidverfahren ist beispielsweise durch die JPH06190576A bekannt geworden.

Beim Laserschneiden plattenförmiger Werkstücke ist es wichtig, dass die während des Schneidens entstehende Schlacke ungehindert nach unten aus dem Schnittspalt austreten kann. Um dies zu gewährleisten, besteht die Werkstückauflage in Laserschneidmaschinen für plattenförmige Werkstücke üblicherweise aus mehreren Auflageleisten, welche in einen Rahmen gesteckt sind. Die Auflageleisten weisen eine gezackte Form auf, so dass zum Werkstück nur ein punktförmiger Kontakt besteht. Je nach Größe und Lage eines Werkstückteils auf den Auflageleisten kann es beim Freischneiden des Werkstückteils durch die Einwirkung des Schneidgasdrucks zu einem Verkippen des Teils kommen. Dabei verkeilt sich das Werkstückteil zwischen den Auflageleisten und stellt sich auf, was zu einer Kollision des Schneidkopfs bzw. der Schneidgasdüse mit dem Werkstückteil führen kann. Außerdem wird eine automatisierte Entnahme der Werkstückteile durch die willkürliche Lage erschwert oder sogar verhindert. Kleinere Werkstückteile können bei einer ungünstigen Lage in die Zwischenräume zwischen den Auflageleisten fallen und so auf das unter der Werkstückauflage angeordnete Schlackeförderband oder in Auffangbehälter für die Schlacke gelangen.

Zur Lösung dieses Problems ist es bekannt, die Werkstückteile im Restwerkstück mit Hilfe sogenannter Microjoints, d.h. mittels im Schnittspalt verbleibender Verbindungsstege zwischen Werkstückteil und umgebenden Restwerkstück, zu fixieren, so dass ein Verkippen ausgeschlossen wird. Der Einsatz von Microjoints hat allerdings einige Nachteile: Microjoints erstrecken sich üblicherweise über die gesamte Werkstückdicke, so dass bei Werkstücken mit einer Dicke von mehr als 5 mm ein Herauslösen der Werkstückteile aus dem Restwerkstück von Hand nur sehr schwer oder gar nicht möglich ist. Nach dem Lösen der Werkstückteile verbleiben Rückstände der Microjoints an der Schnittkante und müssen durch aufwendige Nacharbeit entfernt werden. Außerdem werden Microjoints typischerweise am Schnittende gesetzt. Ist in einer Werkstückkontur aber mehr als ein Microjoint notwendig, so kann dieser nur durch zusätzliches Einstechen und Anfahren an die Kontur erzeugt werden. Dadurch sinkt die Produktivität des Schneidprozesses.

Aus JP2001334379A, JPH06190576A, JP2004105990A und JPH0788571A ist es bereits bekannt, Microjoints einzusetzen, die sich nicht über die gesamte Werkstückdicke erstrecken, sondern eine geringere Höhe als die Werkstückdicke aufweisen. Dazu werden mehrere Schneidparameter während der Erzeugung des Microjoints gegenüber den während des Laserschneidens der restlichen Kontur eingestellten Werten verändert.

In JP2001334379A wird offenbart, zum Erzeugen des Microjoints zunächst die Schneidgeschwindigkeit linear zu steigern und parallel die Laserleistung und den Schneidgasdruck zu senken. Anschließend wird der Schneidkopf, ohne zu schneiden, ein Stück zurück bewegt und danach die Laserleistung zunächst auf einen Maximalwert größer als die ursprüngliche Laserleistung erhöht, um wieder in das Werkstück einzustechen. Wenn der Gasdruck wieder auf den ursprünglichen Wert erhöht und die Laserleistung wieder auf die ursprüngliche Laserleistung abgesenkt worden ist, erfolgt das Schneiden der restlichen Kontur. Die Vielzahl der Verfahrensschritte erhöht allerdings die Komplexität des Verfahrens und die benötigte Zeit.

In der eingangs genannten JPH06190576A wird offenbart, zum Erzeugen eines Microjoints die Laserleistung sprunghaft auf einen niedrigeren Wert abzusenken, die Schneidgeschwindigkeit linear zu erhöhen und den Druck verschiedener Gase sprunghaft zu ändern sowie anschließend die Laserleistung sprunghaft auf den ursprünglichen Wert zu erhöhen, die Schneidgeschwindigkeit auf den ursprünglichen Wert linear abzusenken sowie den Druck der Gase sprunghaft zu ändern.

Demgegenüber stellt sich der vorliegenden Erfindung die Aufgabe, ein Verfahren zum Entnehmen eines lasergeschnittenen Werkstückteils weiter zu verbessern.

Diese Aufgabe wird erfindungsgemäß durch ein Verfahren **zum** Entnehmen eines lasergeschnittenen Werkstückteils mit den Merkmalen von Anspruch 1 gelöst.

Dabei wurde erkannt, dass ein lokaler Microjoint im unteren Bereich der Werkstückdicke prozesssicher allein durch das richtige Anpassen entweder der Laserleistung oder der Schneidgeschwindigkeit oder des Abstands einer Schneidgasdüse, durch die der Laserstrahl auf das Werkstück gerichtet wird, zum Werkstück während des Schneidprozesses, d.h. durch das richtige Anpassen eines einzelnen ausgewählten Parameters mittels geeignet gewählter Gradienten der Parameteränderung, generiert werden kann. Dem Schneidprozess steht durch die abgesenkte Laserleistung, die erhöhte Schneidgeschwindigkeit oder die durch den vergrößerten Abstand der Schneidgasdüse zum Werkstück bewirkte Defokussierung des Laserstrahls nicht mehr die für einen vollständigen Schnitt benötigte Streckenenergie und/oder der zum Austrieb der Schmelze benötigte Impuls des Schneidgases zur Verfügung. Dadurch wird das Werkstück nicht über die komplette Werkstückdicke aufgeschmolzen, so dass im unteren Bereich des Schnittspalts bzw. der Schnittkante ein Microjoint zwischen dem lasergeschnittenen Werkstückteil und dem Restwerkstück stehen bleibt. Nach der so erfolgten Erzeugung des Microjoints kann mit Standardparametern weitergeschnitten werden. Alternativ kann der Microjoint am Schnittende einer Kontur platziert und der Laserstrahl nach dem Erzeugen des Microjoints mit der niedrigeren Laserleistung ausgeschaltet werden, wenn bei einer in sich geschlossenen Schneidkontur der Startpunkt wieder erreicht ist oder die Schneidkontur an einer Werkstückkante endet.

Überraschend hat sich gezeigt, dass der Gradient des zeitlichen Abfalls und der Gradient des Anstiegs des geänderten Parameters unterschiedlich sein müssen, um einen Microjoint reproduzierbar und prozesssicher zu erzeugen. Dies lässt sich durch eine Trägheit des Schneidprozesses gegenüber der Änderung von Schneidparametern erklären: Der Übergang vom "Gut-Schnitt" in den "Schlecht-Schnitt" beim Absenken der Laserleistung, Erhöhen der Schneidgeschwindigkeit oder Vergrößern des Abstands zwischen der Schneidgasdüse und dem Werkstück verläuft anders als der Übergang vom "Schlecht-Schnitt" in den "Gut-Schnitt" beim Anstieg der Laserleistung bzw. der Verringerung der Schneidgeschwindigkeit oder des Abstands zwischen Schneidgasdüse und Werkstück. Außerdem sind die Gradienten der Parameteränderung auch davon abhängig, wie hoch die Schneidgeschwindigkeit ist, wie der Austrieb der Schmelze aus dem Schnittspalt erfolgt und welche Form (länglich, rundlich) ein stabiler Microjoint aufweisen muss.

Vorzugsweise erfolgt der Leistungsabfall von der höheren auf die niedrigere Laserleistung nicht sprunghaft, sondern dauert mindestens 5 ms, bevorzugt mindestens 8 ms, bevorzugt mindestens 10 ms. Gleiches gilt in einer alternativen Variante für die Erhöhung der Schneidgeschwindigkeit oder des Abstands zwischen der Schneidgasdüse und dem Werkstück.

Der Leistungsabfall von der höheren auf die niedrigere Laserleistung kann beispielsweise eine exponentiell abfallende Kurve sein oder, was bevorzugt ist, linear oder nahezu linear verlaufen. Ebenso kann der Leistungsanstieg von der niedrigeren auf die höhere Laserleistung beispielsweise eine exponentiell ansteigende Kurve sein oder, was bevorzugt ist, linear oder nahezu linear verlaufen. Gleiches gilt für die Änderung der Schneidgeschwindigkeit oder des Abstands zwischen der Schneidgasdüse und dem Werkstück.

Die niedrigere Laserleistung verläuft vorzugsweise zeitlich konstant oder nahezu konstant auf einem Sockelniveau, kann aber auch zeitlich variieren, also beispielsweise nach dem Leistungsabfall linear ansteigen oder auch weiter linear abfallen, bevor dann der Leistungsanstieg auf die höhere Laserleistung erfolgt. Gleiches gilt für den Verlauf der erhöhten Schneidgeschwindigkeit oder des vergrößerten Abstands zwischen der Schneidgasdüse und dem Werkstück.

Für den Fall eines Sauerstoff-Brennschnittes, bei dem der Laserschnitt mit Sauerstoff als Schneidgas durchgeführt wird, haben Versuche überraschenderweise gezeigt, dass Microjoints verminderter Dicke nur dann prozesssicher erzeugt werden können, wenn der Leistungsanstieg von der niedrigeren auf die höhere Laserleistung langsamer erfolgt als der Leistungsabfall von der höheren auf die niedrigere Laserleistung, bevorzugt mindestens doppelt so lange dauert. Beim Erzeugen des Microjoints erfolgt die Leistungsabsenkung also schneller als die Leistungssteigerung. Für den Fall linearer Absenk- und Anstiegskurven sollten vorteilhafterweise der Betrag der Absenksteigung größer als der Betrag der Anstiegssteigung und der Betrag des Verhältnisses von Absenkungs- zu Anstiegssteigung für alle Blechdicken konstant größer als 1, bevorzugt größer als 2, sein. Dieser Effekt lässt sich dadurch erklären, dass beim Übergang vom "Schlecht-Schnitt" in den "Gut-Schnitt" am Ende des Leistungsanstiegs alle Prozessgrößen optimal sein müssen, um die ideale Schneidfront auszubilden, d.h., dass der Übergang vom "Schlecht-Schnitt" in den "Gut-Schnitt" anspruchsvoller ist. Beim Brennschnitt, bei dem auch die exotherme Oxidationsreaktion wesentlich zum Schneidprozess beiträgt, wird eine lange Übergangszeit benötigt, bis sich optimale Parameter für den "Gut-Schnitt" wieder einstellen. Dieser Zusammenhang muss analog beachtet werden, wenn die Schneidgeschwindigkeit oder der Abstand der Schneidgasdüse zum Werkstück variiert wird: Die Verringerung der Schneidgeschwindigkeit oder die Verringerung des Abstands der Schneidgasdüse zum Werkstück muss langsamer erfolgen als die Erhöhung, bevorzugt mindestens doppelt so lange dauern.

Wie die Versuche weiter gezeigt haben, sollten beim Sauerstoff-Brennschnitt der Leistungsanstieg von der niedrigeren auf die höhere Laserleistung bevorzugt mindestens 30 ms und der Zeitabschnitt der niedrigeren Laserleistung bevorzugt mindestens 20 ms dauern. Die niedrigere Laserleistung muss an unterschiedliche Werkstückdicken angepasst werden, bei zunehmender Werkstückdicke nimmt auch die niedrigere Laserleistung zu. Dennoch können für alle Werkstückdicken die Zeitabschnitte des Leistungsabfalls, des Leistungsanstiegs und der niedrigeren Laserleistung gleichlang oder nahezu gleichlang gewählt werden. Diese Werte gelten analog für die Änderung der Schneidgeschwindigkeit oder des Abstands von Schneidgasdüse zu Werkstück.

Für den Fall eines Schmelzschnittes, bei dem der Laserschnitt mit einem Inertgas, beispielsweise Stickstoff, oder einem Inertgas-Luft-Gemisch (z.B. Druckluft) als Schneidgas durchgeführt wird, haben Versuche überraschenderweise gezeigt, dass Microjoints verminderter Dicke nur dann prozesssicher erzeugt werden können, wenn der Leistungsanstieg von der niedrigeren auf die höhere Laserleistung schneller erfolgt als der Leistungsabfall von der höheren auf die niedrigere Laserleistung, bevorzugt mindestens doppelt, besonders bevorzugt mindestens 5mal so schnell. Beim Erzeugen des Microjoints erfolgt die Leistungsabsenkung also langsamer als die Leistungssteigerung. Die Leistungssteigerung muss schneller erfolgen, um eine ideale (steilere) Schneidfrontneigung zu erhalten, so dass die Schmelze wieder sicher nach unten aus dem Schnittspalt ausgetrieben wird. Für den Fall linearer Absenk- und Anstiegskurven sollten vorteilhafterweise der Betrag der Absenksteigung kleiner als der Betrag der Anstiegssteigung und der Betrag des Verhältnisses von Absenk- zu Anstiegssteigung für alle Werkstückdicken kleiner als 1, vorzugsweise kleiner als 0,5 und insbesondere gleich 0,1 sein. Gleiches gilt, wenn die Schneidgeschwindigkeit oder der Abstand der Schneidgasdüse zum Werkstück variiert wird: Die Verringerung der Schneidgeschwindigkeit oder die Verringerung des Abstands der Schneidgasdüse zum Werkstück muss schneller erfolgen als die Erhöhung, bevorzugt mindestens doppelt, besonders bevorzugt mindestens 5mal so schnell.

Wie die Versuche weiter gezeigt haben, sollten beim Stickstoff-Schmelzschnitt der Leistungsanstieg von der niedrigeren auf die höhere Laserleistung weniger als 5 ms, bevorzugt weniger als 2 ms, und der Zeitabschnitt der niedrigeren Laserleistung mindestens 5 ms, bevorzugt mindestens 8 ms, dauern. Weiterhin sollten die niedrigere Laserleistung mindestens 3 kW betragen und der Schneidgasdruck kleiner als 10 bar sein. Für alle Werkstückdicken können die Zeitabschnitte des Leistungsabfalls, des Leistungsanstiegs und der niedrigeren Laserleistung gleichlang oder nahezu gleichlang gewählt werden. Diese Werte gelten ebenso bei einer Variation der Schneidgeschwindigkeit oder des Abstands zwischen der Schneidgasdüse und dem Werkstück.

Die Erfindung betrifft ein z.B. durch DE 10 2014 209 811 A1 bekanntes Verfahren zum Entnehmen eines lasergeschnittenen, insbesondere plattenförmigen Werkstückteils aus dem Restwerkstück, wobei das Werkstückteil von seiner einen Seite durch einen insbesondere flächigen Gegenhalter verkippsicher gehalten und von der anderen Seite mit mindestens einem Ausdrückelement (z.B. Ausdrückstift) aus dem Restwerkstück herausgedrückt wird. Erfindungsgemäß wird das Werkstückteil vor der Entnahme durch mindestens einen Microjoint mit einer geringeren Höhe als die Werkstückdicke im Restwerkstück gehalten und der Microjoint bei der Entnahme durchtrennt. Dieses erfindungsgemäße Entnahmeverfahren kann sowohl bei Microjoints, die nach dem oben beschriebenen Laserschneidverfahren erzeugt worden sind, als auch bei anderweitig erzeugten Microjoints mit einer geringeren Höhe als der Werkstückdicke angewandt werden.

Indem das lasergeschnittene Werkstückteil von der dem Ausdrückelement gegenüberliegenden Seite durch den Gegenhalter stabilisiert und in waagerechter Ausrichtung gehalten wird, können die Microjoints gut durchtrennt werden, ohne dass es zu einem Verhaken oder Verkanten des Werkstückteils im Restwerkstück kommt. Das Ausdrücken kann dabei sowohl von oben als auch von unten erfolgen. Der Gegenhalter kann zusätzlich auch dazu dienen, das entnommene Werkstück abzutransportieren, wenn er beispielsweise als Saugvorrichtung oder absenkbares Förderband ausgebildet ist. Durch die reduzierte Höhe der Microjoints ist die Kraft, die zum Durchtrennen der Microjoints benötigt wird, nicht wesentlich höher als die zum Ausdrücken des Werkstückteils aus dem Schnittspalt benötigte Kraft, was eine prozesssichere Entnahme ohne zu große Krafteinwirkung ermöglicht.

Dabei wird die Positionierung des Ausdrückelements bzw. der Ausdrückelemente vorzugsweise so gewählt, dass das Ausdrückelement bzw. der Schwerpunkt der durch mehrere Ausdrückelemente aufgespannten Fläche vom Schwerpunkt des Werkstückteils in Richtung auf den oder die Microjoints versetzt ist, um so die Prozesssicherheit der Entnahme weiter zu erhöhen.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen eines Laserschneidverfahrens geeignete Laserschneidmaschine;
- Fign. 2a, 2b: ein aus einem Werkstück lasergeschnittenes Werkstückteil, das durch Microjoints im Restwerkstück gehalten ist, in einer Draufsicht (Fig. 2a) und in einer Schnittansicht (Fig. 2b) entsprechend IIb-IIb in Fig. 2a;
- Fig. 3: eine erste Leistungs-Absenkrampe zum Erzeugen eines Microjoints beim Laserschneiden eines Werkstücks mit Sauerstoff als Schneidgas;
- Fig. 4: eine zweite Leistungs-Absenkrampe zum Erzeugen eines Microjoints beim Laserschneiden eines Werkstücks mit Stickstoff als Schneidgas; und
- Fign. 5a-5f: das Durchtrennen eines Microjoints beim Herausdrücken eines zwischen einem Ausdrückelement und einem Gegenhalter verkippsicher gehaltenen, lasergeschnittenen Werkstückteils aus dem Restwerkstück.

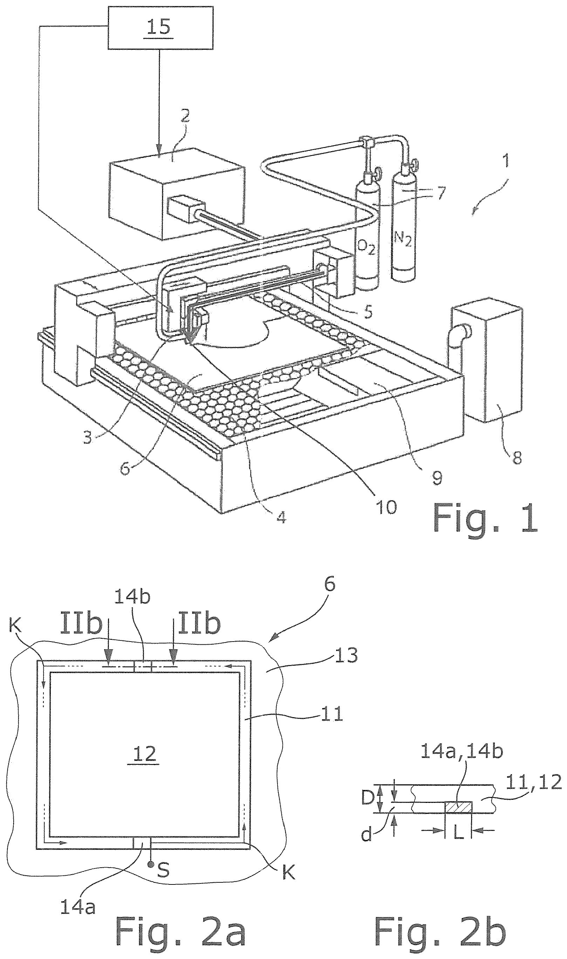

Die in **Fig. 1** perspektivisch dargestellte Laserschneidmaschine **1** weist beispielsweise einen CO₂-Laser, Diodenlaser oder Festkörperlaser als Laserstrahlerzeuger **2,** einen verfahrbaren (Laser)Bearbeitungskopf **3** und eine Werkstückauflage **4** auf. Im Laserstrahlerzeuger 2 wird ein Laserstrahl **5** erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Werkstückauflage 4 ist ein plattenförmiges Werkstück **6** angeordnet. Der Laserstrahl 5 wird mittels einer im Bearbeitungskopf 3 angeordneten Fokussieroptik auf das Werkstück 6 gerichtet. Die Laserschneidmaschine 1 wird darüber hinaus mit Schneidgasen **7,** beispielsweise Sauerstoff und Stickstoff, versorgt. Die Verwendung des jeweiligen Schneidgases 7 ist vom Werkstückmaterial und von Qualitätsanforderungen an die Schnittkanten abhängig. Weiterhin ist eine Absaugeinrichtung **8** vorhanden, die mit einem Absaugkanal **9,** der sich unter der Werkstückauflage 4 befindet, verbunden ist. Das Schneidgas 7 wird einer Schneidgasdüse **10** des Bearbeitungskopfes 3 zugeführt, aus der es zusammen mit dem Laserstrahl 5 austritt.

Beim Laserschneiden wird das Werkstück 6 entlang einer gewünschten Bahnkurve **K** mittels eines Laserstrahls 5 mit einer zum Durchschneiden des Werkstücks 6 ausreichenden, höheren Laserleistung **P_{A}** geschnitten, wobei vorliegend der Laserstrahl 5, alternativ oder zusätzlich aber auch das Werkstück 6 bewegt wird. Dazu muss zunächst auf oder neben der zu schneidenden Bahnkurve Kan einem Punkt **S** in das Werkstück eingestochen werden, wie in **Fig. 2a** gezeigt ist.

Wie in **Fign. 2a, 2b** gezeigt, werden beim Laserschneiden des Werkstücks 6 im Schnittspalt **11** zwischen einem lasergeschnittenen Werkstückteil **12** und dem Restwerkstück **13** Verbindungsstege bzw. Microjoints **14a, 14b** stehen gelassen, die das Werkstückteil 12 im Restwerkstück 13 fixieren und somit ein Verkippen gegenüber dem Restwerkstück 13 verhindern. Wie in Fig. 2b gezeigt, erstreckt sich der Microjoint 14 nicht über die gesamte Werkstückdicke **D,** sondern nur im unteren Drittel der Werkstückdicke, weist also eine geringere Höhe **d** als die Werkstückdicke D auf. Der Microjoint 14a befindet sich am Schnittende, wird also erzeugt, kurz bevor der Startpunkt S der in sich geschlossenen Bahnkurve K wieder erreicht ist. Der Microjoint 14b befindet sich dagegen nicht am Schnittende, sondern an einem beliebigen Teil der Bahnkurve K.

Im Folgenden wird ein Verfahren am Beispiel der Variation der Laserleistung beschrieben. Bei dieser Ausführung des Verfahrens werden die Microjoints 14a, 14b allein durch gezieltes Anpassen der Laserleistung während des Schneidprozesses mittels geeignet gewählter Leistungsgradienten generiert, die von einer in Fig. 1 gezeigten Steuerung **15** der Laserschneidmaschine 1 in Abhängigkeit des Werkstückmaterials vorgegeben werden. Die Steuerung 15 steuert auch die Bewegung des Bearbeitungskopfes 3 gegenüber dem Werkstück 6. Dem Schneidprozess steht durch die abgesenkte Laserleistung nicht mehr die für einen vollständigen Schnitt benötigte Streckenenergie zur Verfügung, so dass das Werkstückmaterial nicht über die komplette Werkstückdicke D aufgeschmolzen wird und im unteren Bereich des Schnittspalts 11 bzw. der Schnittkante ein Microjoint 14a, 14b zwischen dem lasergeschnittenen Werkstückteil 6 und dem Restwerkstück 13 stehen bleibt. Bis auf die Laserleistung bleiben bei der Erzeugung des Microjoints 14a, 14b alle anderen Schneidparameter des Laserschneidens unverändert, also z.B. die Fokuslage des Laserstrahls 5, der Abstand der Schneidgasdüse 10 zur Werkstückoberfläche, der Schneidgasdruck und die Schneidgeschwindigkeit. Nach der Erzeugung des Microjoints 14b wird mit den Standardparametern weitergeschnitten. Nach der Erzeugung des Microjoints 14a wird der Laserstrahl 5 ausgeschaltet.

Zum Erzeugen des nicht am Ende der Bahnkurve K liegenden Microjoints 14b mit einer geringeren Höhe d als die Werkstückdicke D wird beim Laserschneiden des Werkstücks 6 die Laserleistung des Laserstrahls 5 auf einem der Länge **L** des Microjoints 14 entsprechenden Teilstück der Bahnkurve von der zum Durchschneiden des Werkstücks 6 ausreichenden, höheren Laserleistung P_{A} auf eine zum vollständigen Durchschneiden des Werkstücks 6 nicht ausreichende, niedrigere Laserleistung **P_{S}** abgesenkt und anschließend wieder auf die höhere Laserleistung P_{A} erhöht.

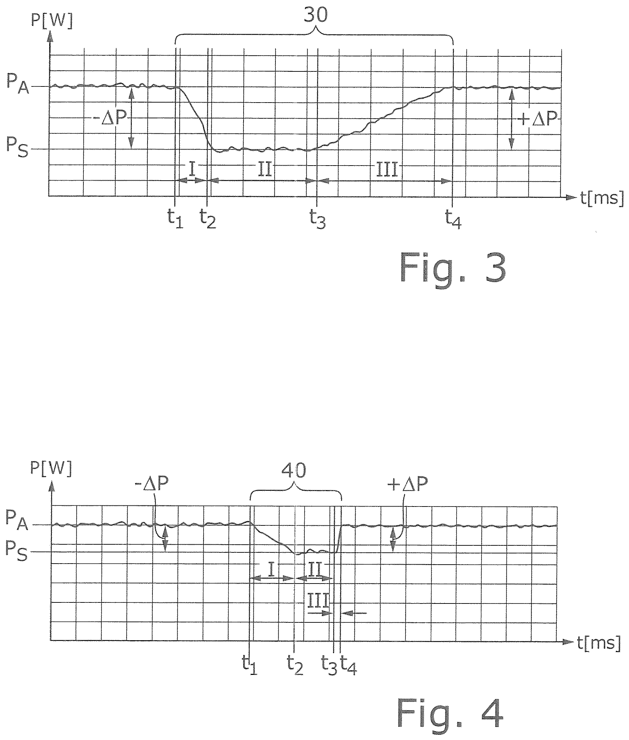

**Fig. 3** zeigt den zeitlichen Verlauf der Laserleistung mit einem Zeitbereich **30** zum Erzeugen des Microjoints 14b beim sogenannten Sauerstoffschnitt, also beim Laserschneiden des Werkstücks 6 unter Verwendung von Sauerstoff als Prozessgas 7. Beim Sauerstoffschnitt wird das Werkstückmaterial geschmolzen und größtenteils oxidiert. Im gezeigten Ausführungsbeispiel erfolgte der Sauerstoffschnitt an einem Baustahl-Werkstück 6 einer Werkstückdicke D von 5 mm und mit einer Laserleistung P_{A} von mehr als 3000 W.

Der Zeitbereich 30 ist in drei Zeitabschnitte I-III unterteilt:

| | |
|---|---|
| I (t1 bis t2): | lineare Leistungsabsenkung **-ΔP** von der höheren Laserleistung P_{A} (3,5 kW) auf die niedrigere Laserleistung P_{S} innerhalb von ca. 15 ms, |
| II (t2 bis t3): | Halten der niedrigeren Laserleistung (Sockelleistung) P_{S} über ca. 25 ms, und |
| III (t3 bis t4) | lineare Leistungssteigerung **+ΔP** von der niedrigeren Laserleistung P_{S} auf die höhere Laserleistung P_{A} innerhalb von ca. 40 ms. |

Beim Erzeugen des Microjoints 14b mittels Sauerstoffschnitt erfolgt der Leistungsanstieg +ΔP von der niedrigeren auf die höhere Laserleistung im Zeitintervall III langsamer als der Leistungsabfall -ΔP von der höheren auf die niedrigere Laserleistung im Zeitintervall I, im gezeigten Ausführungsbeispiel sogar mehr als doppelt so lange. Der Leistungsabfall -ΔP im Zeitintervall I und der Leistungsanstieg +ΔP im Zeitintervall III verlaufen jeweils linear oder nahezu linear, wobei der Betrag des Gradienten dP/dt im Zeitintervall I größer als der Betrag des Gradienten dP/dt im Zeitintervall III ist. Der Betrag des Verhältnisses der Gradienten ist größer als 2 und beträgt im gezeigten Ausführungsbeispiel ca. 2,67. Beim Erzeugen des Microjoints 14a verlaufen der Leistungsabfall -ΔP im Zeitintervall I und das Halten der niedrigeren Laserleistung P_{S} im Zeitintervall II analog. Am Ende des Zeitintervalls II wird der Laserstrahl ausgeschaltet, und der Schnitt ist beendet. Der Zeitpunkt t1, an dem der Leistungsabfall -ΔP beginnt, wird so gewählt, dass am Ende des Zeitintervalls II der Startpunkt der Bahnkurve K wieder erreicht ist.

Die Höhe der niedrigeren Laserleistung (Sockelleistung) P_{S} muss an unterschiedliche Werkstückdicken D angepasst werden, bei zunehmender Werkstückdicke D nimmt auch die Sockelleistung P_{S} im Bereich zwischen 100 W und 3000 W zu.

Die Zeitabschnitte I-III können für alle Werkstückdicken D gleich lang gewählt werden. Die Sockelleistung P_{S} sollte über mindestens 25 ms gehalten werden, damit der erzeugte Microjoint 14a, 14b eine ausreichende Festigkeit aufweist. Der Betrag des Verhältnisses von Absenkungs- zu Anstiegsgradient ist für alle Blechdicken D größer als 1, bevorzugt größer als 2 und beträgt insbesondere ca. 2,67.

**Fig. 4** zeigt den zeitlichen Verlauf der Laserleistung mit einem Zeitbereich **40** zum Erzeugen des nicht am Ende der Bahnkurve K liegenden Microjoints 14b beim sogenannten Schmelzschnitt, also beim Laserschneiden des Werkstücks 6 unter Verwendung von einem Inertgas oder einem Inertgas-Sauerstoff-Gemisch, z.B. Stickstoff, als Schneidgas 7. Beim Schmelzschnitt wird das Werkstückmaterial lediglich geschmolzen. Die entstandene Schmelze wird dann ausgeblasen und zusammen mit dem Schneidgas 7 über den Absaugkanal 9 durch die Absaugeinrichtung 8 abgesaugt. Für den Schmelzschnitt wird bei gleicher Werkstückdicke und gleichem Material eine Leistung von 8 kW benötigt, da das Prozessgas keine Prozessenergie beiträgt und die Schneidgeschwindigkeiten höher sind als beim Brennschnitt. Im gezeigten Ausführungsbeispiel erfolgte der Stickstoff-Schmelzschnitt ebenfalls an einem Baustahl-Werkstück 6 einer Werkstückdicke D von 5 mm, aber mit einer Ausgangsleistung von 8 kW und einem Schneidgasdruck von 6 bar. Der größte Unterschied zwischen Sauerstoff-Brennschnitt und Stickstoff-Schmelzschnitt besteht in den höheren Vorschubgeschwindigkeiten beim Schmelzschnitt. Daher sind sowohl die Zeitdauern der Leistungsabsenkung bzw. Leistungssteigerung als auch die Zeitdauer für das Halten der Sockelleistung deutlich geringer als beim Brennschnitt. Aufgrund der kürzeren Zeiten und der relativ zur Ausgangsleistung geringeren Absenkung ist der Einfluss auf den Schneidprozess geringer. Die Laserleistung muss im Vergleich zum Brennschnitt weniger weit relativ zur Ausgangsleistung abgesenkt werden, da das Prozessgas keine Energie zum Schneidprozess beiträgt.

Untersuchungen beim Schmelzschnitt haben gezeigt, dass die prozesssichere Erzeugung von Microjoints 14a, 14b mit einer Höhe d kleiner als die Werkstückdicke D nur bei reduziertem Schneidgasdruck möglich ist, dass der Schneidgasdruck also einen entscheidenden Faktor für die erfolgreiche Erzeugung eines Mikrojoints 14a, 14b beim Schmelzschnitt darstellt. Durch den bisher beim Schmelzschnitt üblichen Schneidgasdruck von deutlich über 10 bar lässt sich eine reproduzierbare Erzeugung des Microjoints 14a, 14b nicht erreichen. Zwar kann durch eine Reduzierung der Laserleistung eine Verbindung zwischen dem Werkstückteil und dem Restgitter erzeugt werden, jedoch schwankt die Höhe und Stabilität des erzeugten Microjoints 14a, 14b schon bei geringen Schwankungen der Laserleistung von weniger als 50 W deutlich. Es hat sich vielmehr gezeigt, dass sich Microjoints 14a, 14b durch Leistungsvariation prozesssicher erzeugen lassen, wenn der Druck des Schneidgases 4 unter 10 bar beträgt.

Der Zeitbereich 40 ist in drei Zeitabschnitte I-III unterteilt:

| | |
|---|---|
| I (t1 bis t2): | lineare Leistungsabsenkung -ΔP von der höheren Laserleistung P_{A} auf die niedrigere Laserleistung P_{S} innerhalb von ca. 10 ms, |
| II (t2 bis t3): | Halten der niedrigeren Laserleistung (Sockelleistung) P_{S} über ca. 8 ms, und |
| III (t3 bis t4) | lineare Leistungssteigerung +ΔP von der niedrigeren Laserleistung P_{S} auf die höhere Laserleistung P_{A} innerhalb von ca. 1 ms. |

Beim Erzeugen des Microjoints 14b mittels Stickstoff-Schmelzschnitt erfolgt der Leistungsanstieg +ΔP im Zeitabschnitt III schneller als der Leistungsabfall -ΔP im Zeitabschnitt I, bevorzugt mindestens doppelt, besonders bevorzugt mindestens 5mal so schnell, im gezeigten Ausführungsbeispiel sogar ca. 10 mal so schnell. Der Leistungsabfall -ΔP im Zeitabschnitt I und der Leistungsanstieg +ΔP im Zeitabschnitt III verlaufen jeweils linear oder nahezu linear, wobei der Betrag des Leistungsgradienten dP/dt im Zeitabschnitt I kleiner als der Betrag des Leistungsgradienten dP/dt im Zeitabschnitt III ist. Der Betrag des Verhältnisses der Gradienten ist kleiner als 1, vorzugsweise kleiner als 0,5, und beträgt im gezeigten Ausführungsbeispiel ca. 0,1.

Beim Erzeugen des Microjoints 14a verlaufen der Leistungsabfall -ΔP im Zeitintervall I und das Halten der niedrigeren Laserleistung P_{S} im Zeitintervall II ebenso wie beim Erzeugen des Microjoints 14b. Am Ende des Zeitintervalls II wird der Laserstrahl jedoch ausgeschaltet, und der Schnitt ist beendet. Der Zeitpunkt t1, an dem der Leistungsabfall -ΔP beginnt, wird so gewählt, dass am Ende des Zeitintervalls II der Startpunkt der Bahnkurve K wieder erreicht ist.

Die einzelnen Zeitabschnitte I-III sind kürzer als beim Sauerstoff-Brennschnitt, da die Schneidgeschwindigkeit höher ist und das Schneidgas keinen Energiebeitrag leistet. So ist schon nach einer geringeren Zeitdauer ein ausreichend langer und stabiler Mikrojoint 14a, 14b gebildet. Die Sockelleistung P_{S} sollte über mindestens 8 ms gehalten werden, damit der erzeugte Microjoint 14a, 14b eine ausreichende Festigkeit aufweist. Durch die Wahl von Sockelleistung P_{S} und Dauer des Zeitabschnitts II kann die Festigkeit des Microjoints 14a, 14b beeinflusst werden.

Die Höhe der Sockelleistung P_{S} kann an unterschiedliche Werkstückdicken D angepasst werden, muss aber mindestens 3000 W betragen.

Die Zeitabschnitte I-III können für alle Werkstückdicken D gleich lang gewählt werden. Der Betrag des Verhältnisses von Absenkungs- zu Anstiegsgradient ist für alle Blechdicken D kleiner als 1, vorzugsweise kleiner als 0,5 und beträgt insbesondere ca. 0,1.

Mit dem Verfahren können sowohl beim Sauerstoff-Brennschnitt als auch beim Stickstoff-Schmelzschnitt Microjoints 14a, 14b mit reduzierter Höhe d prozesssicher erzeugt werden, die sich einfach manuell auftrennen lassen und nur geringe Rückstände auf der Schneidkante hinterlassen. Da die Schneidgeschwindigkeit während der Bildung des Microjoints 14a, 14b nicht reduziert werden muss, bleibt die Produktivität des Schneidprozesses erhalten. Es muss nur ein Bearbeitungsparameter variiert werden, und es entstehen kurze, stabile Microjoints 14a, 14b, die auch in Bahnkurven K mit engen Radien platziert werden können. Je nach Art des zu schneidenden Werkstücks sowie Form und Größe der Bahnkurven kann es aber auch vorteilhaft sein, eine alternative Variante des Verfahrens anzuwenden und nicht die Laserleistung sondern die Schneidgeschwindigkeit oder den Abstand zwischen der Schneidgasdüse 10 und dem Werkstück 6 zu ändern.

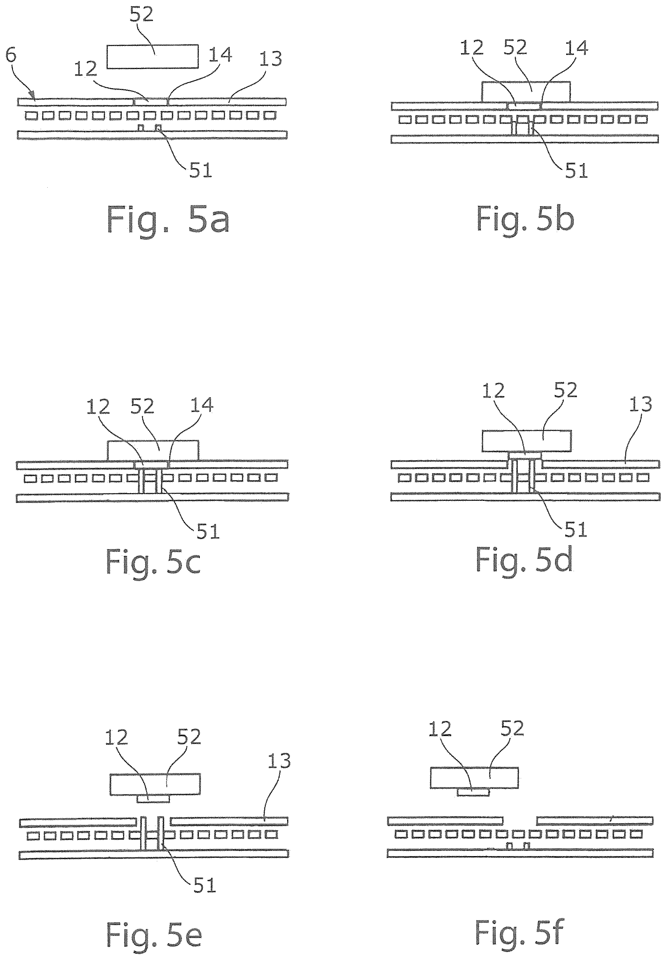

In den **Fign. 5a-5f** ist das Durchtrennen eines Microjoints 14 beim (Sandwich)-Herausdrücken eines zwischen mehreren Ausdrückelementen (z.B. Aushebestifte) **51** und einem als Vakuumsauger ausgebildeten, flächigen Gegenhalter **52** verkippsicher gehaltenen, lasergeschnittenen Werkstückteils 12 aus dem Restwerkstück 13 gezeigt.

Fig. 5a zeigt das lasergeschnittene Werkstückteil 12, das über mehrere Microjoints 14, welche eine geringere Höhe als die Werkstückdicke aufweisen, noch im Restwerkstück 13 gehalten ist. In Fig. 5b ist der Gegenhalter 52 von oben auf das Werkstückteil 12 und den angrenzenden Randbereich des Restwerkstücks 13 abgesenkt. Die Ausdrückelemente 51 fahren hoch, bis sie in Fig. 5c an der Unterseite des Werkstückteils 12 anliegen und somit das Werkstückteil 12 verkippsicher zwischen den Ausdrückelementen 51 und dem Gegenhalter 52 gehalten ist. Anschließen fahren die Ausdrückelemente 51 und der Gegenhalter 52 synchron hoch, wodurch das Werkstückteil 12 aus dem Restwerkstück 13 hochgedrückt wird und dabei die Microjoints 14 durchtrennt werden (Fig. 5d). Die Saugfunktion des Gegenhalters 52 wird aktiviert, um das Werkstückteil 12 am Gegenhalter 52 zu halten und abtransportieren zu können (Fign. 5e, 5f).

Indem das Werkstückteil 12 von der gegenüberliegenden Seite durch den Gegenhalter 52 stabilisiert und in waagerechter Ausrichtung gehalten wird, können die Microjoints 14 gut durchtrennt werden, ohne dass es zu einem Verhaken oder Verkanten des Werkstückteils 12 im Restwerkstück 13 kommt. Das Ausdrücken kann dabei sowohl von oben als auch von unten erfolgen. Durch die reduzierte Höhe der Microjoints 14 ist die Kraft, die zum Durchtrennen der Microjoints 14 benötigt wird, nicht wesentlich höher als die zum Ausdrücken des Werkstückteils 12 aus dem Schnittspalt benötigte Kraft, was eine prozesssichere Entnahme ermöglicht.

Vorzugsweise wird die Positionierung des Ausdrückelements 51 bzw. der Ausdrückelemente 51 so gewählt, dass die von den Ausdrückelementen 51 aufgespannte Fläche gegenüber dem Schwerpunkt des Werkstückteils 12 in Richtung auf den oder die Microjoints 14 versetzt ist.

## Patentansprüche

1. Verfahren zum Entnehmen eines lasergeschnittenen, insbesondere plattenförmigen Werkstückteils (12) aus einem Restwerkstück (13), wobei das Werkstückteil (12) von seiner einen Seite durch einen insbesondere flächigen Gegenhalter (52) verkippsicher gehalten und von der anderen Seite mit mindestens einem Ausdrückelement (51) aus dem Restwerkstück (13) herausgedrückt wird, wobei das Werkstückteil (12) vor der Entnahme durch mindestens einen Microjoint (14) mit einer geringeren Höhe (d) als die Werkstückdicke (D) im Restwerkstück (13) gehalten und der Microjoint (14) bei der Entnahme durchtrennt wird.

2. Verfahren nach Anspruch 1, wobei der Gegenhalter (52) dazu ausgebildet ist, das Werkstückteil (12) abzutransportieren.

3. Verfahren nach Anspruch 2, wobei der Gegenhalter (52) absenkbares Förderband ausgebildet ist.

4. Verfahren nach Anspruch 2, wobei der Gegenhalter (52) als Saugvorrichtung (52), insbesondere als Vakuumsauger (52), ausgebildet ist.

5. Verfahren nach Anspruch 4, wobei der Gegenhalter (52) oberhalb des Werkstückteils (12) angeordnet ist und von oben auf das Werkstückteil (12) und einen angrenzenden Randbereich des Restwerkstücks (13) abgesenkt wird, wobei die Ausdrückelemente (51) unterhalb des Werkstückteils (52) angeordnet sind und hochgefahren werden, bis sie an der Unterseite des Werkstückteils (12) anliegen und somit das Werkstückteil (12) verkippsicher zwischen den Ausdrückelementen (51) und dem Gegenhalter (52) gehalten ist, wobei anschließend die Ausdrückelemente (51) und der Gegenhalter (52) synchron hochgefahren werden, wodurch das Werkstückteil (12) aus dem Restwerkstück (13) hochgedrückt wird und dabei die Microjoints (14) durchtrennt werden, wobei anschließend das Werkstückteil (12) mittels des Gegenhalters (52) abtransportiert wird.

6. Verfahren nach einem der vorhergehenden Ansprüche, bei dem das Ausdrückelement bzw. der Schwerpunkt der durch mehrere Ausdrückelemente (51) aufgespannten Fläche vom Schwerpunkt des Werkstückteils (12) hin in Richtung auf den mindestens einen Microjoint (14) versetzt ist.

## Claims

1. A method for removing a laser-cut, in particular plate-shaped workpiece part (12) from a workpiece remainder (13), wherein the workpiece part (12) is held from one of its sides by an in particular flat mating holder (52), in a tipping-safe manner, and is pushed out of the workpiece remainder (13) from the other side with at least one pushing-out element (51), wherein before it is removed, the workpiece part (12) is held in the workpiece remainder (13) by at least one microjoint (14) with a lower height (d) than the workpiece thickness (D), and wherein the microjoint (14) is severed upon removal.

2. The method according to claim 1, wherein the mating holder (52) is designed to take the workpiece part (12) away.

3. The method according to claim 2, wherein the mating holder (52) is designed as a lowerable conveyor belt.

4. The method according to claim 2, wherein the mating holder (52) is designed as a suction device (52), in particular a vacuum suction apparatus (52).

5. The method according to claim 4, wherein the mating holder (52) is arranged above the workpiece part (12) and is lowered from above onto the workpiece part (12) and a bordering edge region of the workpiece remainder (13), wherein the pushing-out elements (51) are arranged below the workpiece part (52) and are raised until they lie against the bottom side of the workpiece part (12), and thereby hold the workpiece part (12) in a tipping-safe manner between the pushing-out elements (51) and the mating holder (52), wherein the pushing-out elements (51) and the mating holder (52) are raised synchronously, whereby the workpiece part (12) is pushed upward out of the workpiece remainder (13), and in the process the microjoints (14) are severed, wherein the workpiece part (12) is then taken away by means of the mating holder (52).

6. The method according to any one of the preceding claims, in which the pushing-out element, or the center of mass of the area spanned by a plurality of pushing-out elements (51) is shifted away from the center of mass of the workpiece part (12) in the direction of the at least one microjoint (14).

## Revendications

1. Procédé pour extraire une portion de pièce (12) découpée au laser, en particulier en forme de plaque, à partir d'une pièce restante (13), dans lequel la portion de pièce (12) est maintenue, sur l'un de ses côtés, au moyen d'un contre-appui (52), en particulier surfacique, de manière à empêcher le basculement, et, est expulsée de l'autre côté hors de la pièce restante (13) au moyen d'au moins un élément d'expulsion (51), dans lequel la portion de pièce (12) est retenue, avant l'extraction, dans la pièce restante (13) par au moins une micro-jonction (14) présentant une hauteur (d) inférieure à l'épaisseur de la pièce (D), et la micro-jonction (14) est sectionnée lors de l'extraction.

2. Procédé selon la revendication 1, dans lequel le contre-appui (52) est conçu pour transporter la portion de pièce (12).

3. Procédé selon la revendication 2, dans lequel le contre-appui (52) est conçu en tant que bande transporteuse abaissable.

4. Procédé selon la revendication 2, dans lequel le contre-appui (52) est conçu comme dispositif d'aspiration (52), en particulier comme ventouse à vide (52).

5. Procédé selon la revendication 4, dans lequel le contre-appui (52) est disposé au-dessus de la portion de pièce (12) et est abaissé par le dessus sur la portion de pièce (12) ainsi que sur une zone de bord adjacente de la pièce restante (13), dans lequel les éléments d'expulsion (51) sont disposés au-dessous de la portion de pièce (52) et sont relevés jusqu'à venir en appui contre la face inférieure de la portion de pièce (12), de sorte que la portion de pièce (12) est maintenue de manière à empêcher le basculement, entre les éléments d'expulsion (51) et le contre-appui (52), dans lequel, ensuite, les éléments d'expulsion (51) et le contre-appui (52) sont relevés de manière synchrone, ce par quoi la portion de pièce (12) est poussée vers le haut hors de la pièce restante (13) et les micro-jonctions (14) sont sectionnées, dans lequel la portion de pièce (12) est ensuite transportée au moyen du contre-appui (52).

6. Procédé selon l'une des revendications précédentes, au cours duquel l'élément d'expulsion ou le centre de gravité de la surface définie par plusieurs éléments d'expulsion (51) est décalé, depuis le centre de gravité de la portion de pièce (12), en direction de ladite au moins une micro-jonction (14).
